(19) Europäisches Patentamt
European Patent Office
Office européen des brevets

(11) **EP 4 064 540 B1**

(12) **EUROPEAN PATENT SPECIFICATION**

(45) Date of publication and mention
of the grant of the patent:
**03.07.2024 Bulletin 2024/27**

(21) Application number: **22163550.1**

(22) Date of filing: **22.03.2022**

(51) International Patent Classification (IPC):
*H02M 3/00* (2006.01)    *H02M 7/48* (2007.01)
*H02M 1/00* (2006.01)

(52) Cooperative Patent Classification (CPC):
**H02M 7/4815; H02M 1/0003; H02M 1/0009;
H02M 1/0058; H02M 3/01;** Y02B 70/10

(54) **CONTROL CIRCUIT, CONTROL METHOD AND POWER CONVERTER**

STEUERSCHALTUNG, STEUERVERFAHREN UND STROMWANDLER

CIRCUIT DE COMMANDE, PROCÉDÉ DE COMMANDE ET CONVERTISSEUR DE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.03.2021 CN 202110318807**

(43) Date of publication of application:
**28.09.2022 Bulletin 2022/39**

(73) Proprietor: **Silergy Semiconductor Technology
(Hangzhou) Ltd
Zhejiang 310051 (CN)**

(72) Inventors:
• **WANG, Longqi**
  **Zhejiang, 310051 (CN)**
• **JIN, Jin**
  **Zhejiang, 310051 (CN)**
• **WANG, Hongxing**
  **Zhejiang, 310051 (CN)**

(74) Representative: **Ström & Gulliksson AB
P.O. Box 793
220 07 Lund (SE)**

(56) References cited:
**EP-A1- 2 339 736       EP-A1- 2 911 285
CN-A- 110 277 922       CN-U- 209 389 939
US-A1- 2014 268 897     US-A1- 2019 036 456
US-A1- 2021 036 612**

• **DONG HANJING ET AL: "Primary-Side
Regulation Scheme for LLC Resonant Converter
With Improved Resonant Current Sampling
Circuit", IEEE TRANSACTIONS ON POWER
ELECTRONICS, INSTITUTE OF ELECTRICAL
AND ELECTRONICS ENGINEERS, USA, vol. 36,
no. 2, 7 July 2020 (2020-07-07), pages 1242-1246,
XP011811931, ISSN: 0885-8993, DOI:
10.1109/TPEL.2020.3007987 [retrieved on
2020-09-25]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## FIELD

The present disclosure relates to the field of power electronics, and in particular to a control circuit, a control method and a power converter.

## BACKGROUND

An LLC resonant circuit has a feature of soft switching. With the LLC resonant circuit, switching loss can be significantly reduced and energy transmission efficiency can be improved. Therefore, at present, the LLC resonant circuit is a widely used high-power topology. The LLC resonant circuit is usually implemented in an isolation form. According to the conventional technology, an output current of the LLC resonant circuit is controlled based on sampling of a secondary current. Specifically, an output terminal of the LLC resonant circuit is coupled with a sampling resistor to acquire a secondary sampling current representing the output current. Then, a compensation signal is generated based on the secondary sampling current and a reference signal, and then the compensation signal is transmitted via an optocoupler to a primary control circuit to generate a control signal to control an operation state of the LLC resonant circuit.

However, according to the conventional technology, many peripheral devices and an optocoupler are required in controlling the output current of the LLC resonant circuit based on the sampling of the secondary current, resulting in the LLC resonant circuit having a large size, and thereby being unconducive to system integration. The patent EP2339736A1 provides a control device for a resonant converter, where the converter includes a switching circuit adapted to drive a resonant load, the resonant load includes at least one transformer with at least a primary winding and at least a secondary winding and the converter is adapted to convert an input signal into an output signal, and the switching circuit includes at least a half bridge of first and second switches and the central point of said half bridge is connected to said resonant load. The patent CN209389939U provides a control circuit for a resonant converter, where the resonance type converter includes a transformer and a resonance circuit connected with a primary winding of the transformer, the control circuit includes a first capacitor, the first capacitor is charged by adopting pull-up current and discharged by adopting pull-down current in a resonance period, and thus a compensation signal is generated. The patent US20190036456A1 provides a current control circuit for a power converter, where the power converter has a primary circuit for receiving a supply current across a first supply rail and a second supply rail, there is a primary connection in the primary circuit, the power converter also has a secondary circuit providing an output current, there is a secondary connection in the secondary circuit, and the secondary connection is connected to the primary connection. The document XP0011811931 provides a primary-side regulation scheme for LLC resonant converter with an improved resonant current sampling circuit. The patent US2021036612A1 provides a battery charging circuit, where a primary rectifier circuit is configured to rectify an input AC voltage into a rectified voltage signal, a DC-DC converter is configured to generate a charging current according to the rectified voltage signal, and a control circuit is configured to adjust the charging current by controlling an operation state of the DC-DC converter according to a charging requirement. The patent CN110277922A provides an LLC primary side constant current control device and a compensation current signal extraction method. The control device receives voltage signals at two ends of a transformer winding of a converter and sampled primary side resonance current signals, extracts first resonance interval current signals from the primary side current shaping signals according to a time interval, shapes the first resonance interval current signals according to the voltage polarity of the transformer winding, and adds bias voltage and obtains first resonance interval average current signals after average processing. The patent EP2911285A1 provides an interleaved LLC convertor with current sharing, including: an interleaved LLC circuit consisting of an even number of LLC circuits connected in parallel, and multiple windings with the same quantity as that of the LLC circuits. The patent US20140268897A1 provides a method and apparatus for controlling power conversion, where the method includes computing a ratio based on both voltage and charge pertaining to power conversion in a resonant converter; comparing the ratio to a threshold; and controlling, independent of switching frequency of the resonant converter, power output from the resonant converter based on whether the ratio satisfies the threshold.

## SUMMARY

The invention is defined by the features of device claim 1 and method claim 9. The dependent claims recite advantageous embodiments of the invention.

In an embodiment, the control method further includes: superimposing a first bias voltage on the voltage of the sampling resistor to obtain a first sampling signal, superimposing the first bias voltage on the current reference signal to obtain a first reference signal, and superimposing the first bias voltage on the first reference current signal to obtain a second reference signal; generating a compensation signal based on an error signal between the first sampling signal and the first reference signal in a case that the voltage of the sampling resistor is greater than zero; generate a compensation signal based on an error signal between the first sampling signal and the second reference signal in a case that the voltage of the sampling resistor is less than zero; and generating the control signal based on a comparison result of the compensation signal and a ramp signal to control the operation state of the switching circuit.

In an embodiment, the control method further includes: controlling the first bias voltage to ensure that the first sampling signal is greater than or equal to zero.

In an embodiment, the control method further includes: controlling the first bias voltage to be greater than at least twice the current reference signal to ensure that the first sampling signal is greater than or equal to zero.

Compared with the conventional technology, the technical solutions in the present disclosure have the following advantages. The power converter in the present disclosure includes a switching circuit including at least one half-bridge, a transformer including a primary winding and a secondary winding, a resonant inductor and a resonant capacitor which are connected in series with the primary winding to form a resonant module, a sampling resistor connected in series with the resonant module or connected in series in the resonant module, and a control circuit configured to generate a control signal based on an absolute value of a voltage of the sampling resistor and a current reference signal to control an operation state of the switching circuit to adjust an output current of the power converter. The current reference signal represents an expected value of the output current of the power converter. In the present disclosure, the resonant module and the switching circuit form an LLC resonant main circuit, and the sampling resistor is connected in series in an LLC resonant main circuit at a primary side. In a case that the switching circuit operates at a frequency greater than a first reference frequency, the voltage of the sampling resistor represents the output current of the power converter. Therefore, the operation state of the switching circuit is controlled based on the voltage of the sampling resistor. The power converter in the present disclosure controls the output current of the LLC resonant circuit based on the sampling of the primary current, requiring fewer peripheral devices, without the optocoupler for transmitting signals between the primary side and the secondary side, thereby achieving a circuit in small size and facilitating system integration. Further, the voltage Vcs of the sampling resistor Rcs may be positive or negative, the control circuit raises the voltage Vcs to be greater than or equal to zero based on a first bias voltage Voffset, and switches the comparison reference in different intervals of the voltage Vcs of the sampling resistor Rcs to perform positive and negative current sampling, so that a control signal is generated to control the operation state of the switching circuit. According to the present disclosure, the control signal can be simply implemented, and can be implemented by using an operational amplifier, thereby reducing the cost and simplifying the circuit.

## BRIEF DESCRIPTION OF THE DRAWINGS

The above and other objects, features and advantages of the present disclosure will become clearer by describing the embodiments of the present disclosure below with reference to the drawings. In the drawings:

Figure 1 is a schematic circuit diagram of a power converter according to a first embodiment of the present disclosure;

Figure 2 are waveform diagrams showing operations of a control circuit according to the present disclosure;

Figure 3 is a schematic circuit diagram of a control circuit according to a first embodiment of the present disclosure;

Figure 4 is a waveform diagram showing operation of a driving circuit according to the present disclosure;

Figure 5 is a schematic circuit diagram of a control circuit according to a second embodiment of the present disclosure;

Figure 6 is a waveform diagram showing operation of the control circuit according to the second embodiment of the present disclosure;

Figure 7 is a schematic circuit diagram of a bias voltage superposition circuit according to the present disclosure;

Figure 8 is a schematic circuit diagram of a power converter according to a second embodiment of the present disclosure;

Figure 9 is a schematic circuit diagram of a power converter according to a third embodiment of the present disclosure;

Figure 10 is a schematic circuit diagram of a power converter according to a fourth embodiment of the present disclosure;

Figure 11 is a schematic circuit diagram of a power converter according to a fifth embodiment of the present disclosure; and

Figure 12 is a schematic circuit diagram of a power converter according to a sixth embodiment of the present disclosure.

## DETAILED DESCRIPTION

The present disclosure is described with embodiments in the following, but is not limited thereto. In the following detailed description of the present disclosure, some specific details are described. Those skilled in the art may completely understand the present disclosure without the description of these details. In order to avoid obscuring the essence of the present disclosure, well-known methods, procedures, processes, components and circuits are not described in detail.

In addition, it should be understood by those skilled in the art that the drawings are provided for the purpose of illustration, and are unnecessarily drawn to scale.

In addition, it should be understood that in the following description, the term "circuit" refers to a conductive loop formed by at least one element or sub-circuit through electrical connection or electromagnetic connection. When an element or circuit is described as being "connected to" another element or "connected" between two nodes, the element or circuit may be directly coupled or connected to the another element or via an intermediate element, and the connection between elements may be physical, logical, or a combination thereof. When an element is described as being "directly coupled" or "directly connected" to another element, it means that there is no intermediate element therebetween.

Unless explicitly expressed by the context, the terms "including", "comprising", and the like throughout the specification and claims should be interpreted as nonexclusive, that is, they means "including but not limited to".

In the description of the present disclosure, it should be understood that the terms "first", "second" and the like are used only for the purpose of description and are not construed as indicating or implying relative importance. Further, in the description of the present disclosure, the term "a plurality" means two or more unless otherwise specified.

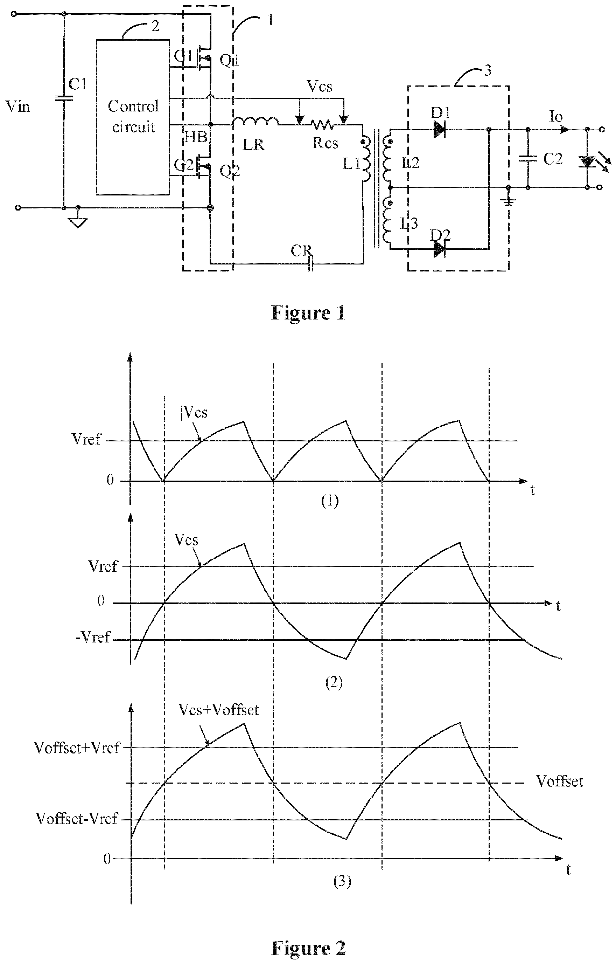

Figure 1 is a schematic circuit diagram of a power converter according to a first embodiment of the present disclosure. As shown in Figure 1, the power converter adopts a half-bridge LLC circuit, including a switching circuit 1, a transformer, a resonant inductor LR, a resonant capacitor CR, a sampling resistor Rcs, a control circuit 2 and a secondary rectifier circuit 3.

In the embodiment, the switching circuit 1 includes a first power switch Q1 and a second power switch Q2. The first power switch Q1 and the second power switch Q2 are connected in series between a high potential terminal of an input terminal of the power converter and a ground potential terminal. The first power switch Q1 is controlled to be turned on or turned off in response to a control signal G1, and the second power switch Q2 is controlled to be turned on or turned off in response to a control signal G2.

In the embodiment, the transformer includes a primary winding L1, a secondary winding L2 and a secondary winding L3. The resonant inductor LR, the resonant capacitor CR and the primary winding L1 are connected in series to form a sampling resistor. The sampling resistor Rcs is connected in series with the resonant module or connected in series in the resonant module. In the embodiment, the resonant inductor LR, the sampling resistor Rcs, the primary winding L1 and the resonant capacitor CR are connected in series between a common terminal HB of the first power switch Q1 and the second switch Q2 and the ground potential terminal, which is not limited in the present disclosure. All embodiments in which the resonant inductor LR, the sampling resistor Rcs, the primary winding L1 and the resonant capacitor CR are connected in series between the common terminal HB of the first power switch Q1 and the second switch Q2 and the ground potential terminal fall within the protection scope of the present disclosure.

In the embodiment, the secondary rectifier circuit 3 is coupled with the secondary windings L2 and L3. After a secondary induced alternating current is rectified through the secondary rectifier circuit 3, an output current Io of the power converter is provided at an output terminal of the power converter to supply power to a load. In an embodiment, the load is an LED. Specifically, the secondary rectifier circuit 3 includes a first rectifier transistor D1 and a second rectifier transistor D2. A common terminal of the secondary winding L2 and the secondary winding L3 is a middle terminal of the secondary windings. Another terminal of the secondary winding L2 is a first terminal of the secondary windings, and another terminal of the secondary winding L3 is a second terminal of the secondary windings. A first terminal of the first rectifier transistor D1 is connected to the first terminal of the secondary windings, and a second terminal of the first rectifier transistor D1 serves as a high potential terminal of the output terminal of the power converter. A first terminal of the second rectifier transistor D2 is connected to the second terminal of the secondary windings, and a second terminal of the second rectifier transistor D2 is connected to the second terminal of the first rectifier transistor D1. The middle terminal of the secondary windings serves as a low potential terminal of the output terminal of the power converter. In the embodiment, the secondary rectifier circuit 3 performs rectification in a full-wave rectification manner, which is not limited in the present disclosure. For example, in another embodiment, the transformer includes only one secondary winding, and the secondary rectifier circuit 3 performs rectification in a full-bridge manner. In addition, the rectifier transistors in the embodiment are diodes, which are not limited in the present disclosure. In other embodiments, various conventional electrically controllable switching devices may be used as the rectifier transistors.

In the embodiment, the control circuit 2 is configured to generate a control signal based on an absolute value of a voltage Vcs of the sampling resistor Rcs and a current reference signal Vref to control an operation state of the switching circuit 1 to adjust the output current Io of the power converter. The current reference signal Vref represents an expected value of the output current Io of the power converter.

In a case that the switching circuit 1 operates at a frequency greater than a first reference frequency f1, an absolute value of a current flowing through the resonant inductor LR, (that is, a quotient obtained by dividing the absolute value |Vcs| of the voltage of the sampling resistor Rcs by a resistance of the sampling resistor Rcs), is proportional to a sum of a current flowing through the first rectifier transistor D1 and a current flowing through the second rectifier transistor D2. That is, the absolute value of the current flowing through the resonant inductor LR is proportional to the output current Io of the power converter. Therefore, the voltage Vcs of the sampling resistor Rcs may represent the output current of the power converter in the case that the switching circuit 1 operates at a frequency greater than the first reference frequency f1. The first reference frequency f1 is configured to be equal to a reciprocal of a square root of a product of an inductance of the resonant inductor and a capacity of the resonant capacitor, that is,

$$f1 = 1/\sqrt{LR * CR}$$

Further, in the case that the switching circuit 1 operates at a frequency greater than the first reference frequency f1, if a ratio of the number of turns of the primary winding and the number of turns of the secondary winding is equal to N: 1, the quotient obtained by dividing the absolute value |Vcs| of the voltage of the sampling resistor Rcs by the resistance of the sampling resistor Rcs (that is, the absolute value of the current flowing through the resonant inductor LR) is equal to 1/N of the output current Io of the power converter. Therefore, the absolute value |Vcs| of the voltage of the sampling resistor Rcs is proportional to 1/N of the output current Io of the power converter.

Since in the case that the switching circuit 1 operates at the frequency greater than the first reference frequency f1, the voltage Vcs of the sampling resistor Rcs represents the output current Io of the power converter, so that the control signal may be generated based on the voltage Vcs of the sampling resistor Rcs to control the operation state of the switching circuit 1 to adjust the output current Io of the power converter.

Further, in the embodiment, the primary winding L1 is configured to have an inductance greater than at least twice the inductance of the resonant inductor LR, so that the switching circuit 1 operates at a frequency greater than the first reference frequency f1.

In the embodiment, the power converter further includes a capacitor C1. The capacitor C1 is coupled to the input terminal of the power converter, and is configured to filter an input voltage Vin. In addition, the power converter further includes a capacitor C2. The capacitor C2 is coupled to the output terminal of the power converter, and is configured to filter an output signal of the power converter.

The power switches in the present disclosure may be configured as various conventional electrically controllable switching devices, such as metal oxide semiconductor field effect transistors (MOSFETs), bipolar junction transistors (BITs), or insulated gate bipolar transistors (IGBTs), which is not limited herein.

Figure 2 is a waveform diagram showing operation of a control circuit according to the present disclosure. In Figure 2, the switching circuit 1 operates at a frequency greater than the first reference frequency f1. Vcs represents the voltage of the sampling resistor Rcs, indicating the current flowing through the resonant inductor LR. Vcs is positive in a case that a potential of the sampling resistor Rcs relative to the common terminal HB is less than a potential of the sampling resistor Rcs relative to the ground potential terminal, that is, Vcs is positive in a case that the current flowing through the resonant inductor LR flows to the common terminal HB. |Vcs| represents the absolute value of the voltage of the sampling resistor Rcs. Vref represents the current reference signal. -Vref represents a first reference current signal, and is an inversion of the current reference signal Vref. Vcs+Voffset represents a first sampling signal. Voffset+Vref represents a first reference signal. Voffset-Vref represents a second reference signal. Waveforms (1), (2) and (3) shown in Figure 2 illustrate operation modes of the control circuit according to the present disclosure.

The waveform (1) shown in Figure 2 illustrates a first operation mode of the control circuit 2. In the first operation mode, a control signal is generated based on the absolute value |Vcs| of the voltage of the sampling resistor Rcs and the current reference signal Vref to control the operation state of the switching circuit 1 to adjust the output current Io of the power converter. Specifically, the control circuit 2 includes a compensation circuit and a driving circuit. The compensation circuit is configured to generate a compensation signal Vcomp based on an error signal between the absolute value |Vcs| of the voltage of the sampling resistor Rcs and the current reference signal Vref. The driving circuit is configured to generate control signals G1 and G2 based on the compensation signal Vcomp to control the operation state of the switching circuit 1. The control circuit 2 further includes a rectifier module. The rectifier module is configured to receive the voltage Vcs of the sampling resistor Rcs to obtain the absolute value |Vcs| of the voltage of the sampling resistor Rcs.

The waveform (2) shown in Figure 2 illustrates a second operation mode of the control circuit 2. In the second operation mode, a control signal is generated based on the voltage Vcs of the sampling resistor Rcs, the current reference signal Vref and the first reference current signal -Vref to control the operation state of the switching circuit 1 to adjust the output current Io of the power converter. Specifically, the control circuit 2 includes a compensation circuit and a driving circuit. The compensation circuit is configured to: generate a compensation signal Vcomp based on an error signal between the voltage Vcs of the sampling resistor Rcs and the current reference signal Vref in a case that the voltage Vcs of the sampling resistor Rcs is greater than zero; and generate a compensation signal Vcomp based on an error signal between the voltage Vcs of the sampling resistor Rcs and the first reference current signal -Vref in a case that the voltage Vcs of the sampling resistor Rcs is less than zero. The driving circuit is configured to generate control signals G1 and G2 based on the compensation signal Vcomp to control the operation state of the switching circuit 1.

The waveform (3) shown in Figure 2 illustrates a third operation mode of the control circuit 2. In the third operation mode, a first bias voltage Voffset is superimposed on the voltage Vcs of the sampling resistor Rcs to obtain a first sampling signal Vcs+Voffset, the first bias voltage Voffset is superimposed on the current reference signal Vref to obtain a first reference signal Vcs+Voffset, and the first bias voltage Voffset is superimposed on the first reference current signal -Vref to obtain a second reference signal Voffset-Vref; then control signals G1 and G2 are generated based on the first sampling signal Vcs+Voffset, the first reference signal Voffset+Vref and the second reference signal Voffset-Vref to control the operation state of the switching circuit 1 to adjust the output current Io of the power converter.

In addition, the first bias voltage Voffset is controlled, so that the first sampling signal Vcs+Voffset is greater than or equal to zero. Specifically, the first bias voltage Voffset is controlled to be greater than at least twice the current reference signal Vref, so that the first sampling signal Vcs+Voffset is greater than or equal to zero. The first bias voltage Voffset may further be controlled in another manner to ensure that the first sampling signal Vcs+Voffset is greater than or equal to zero. The manner in which the first bias voltage Voffset is controlled is not limited in the present disclosure.

In the third operation mode of the control circuit 2, the voltage Vcs of the sampling resistor Rcs may be positive or negative, the voltage Vcs is raised to be greater than or equal to zero based on the first bias voltage Voffset, and the comparison reference is switched in different intervals of the voltage Vcs of the sampling resistor Rcs to perform positive and negative current sampling, so that a control signal is generated to control the operation state of the switching circuit 1.

In the above three operation modes of the control circuit 2, the third operation mode of the control circuit 2 can be easily implemented, and be directly implemented by using an operational amplifier. Therefore, the third operation mode is to be described in detail in the present disclosure hereinafter. The operation modes of the control circuit 2 are not limited in the present disclosure.

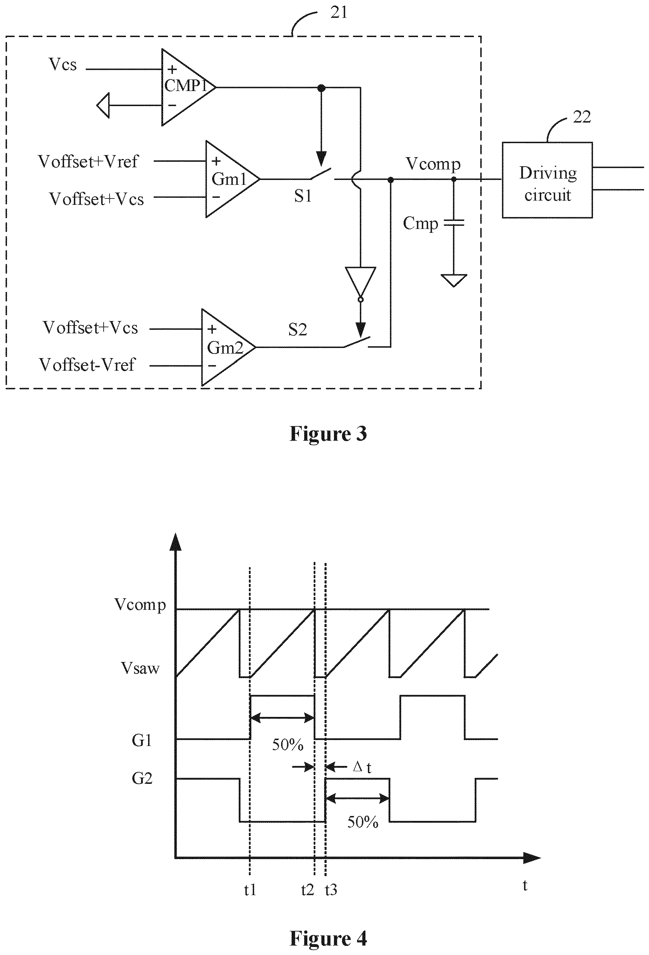

Figure 3 is a schematic circuit diagram of a control circuit according to a first embodiment of the present disclosure. As shown in Figure 3, the control circuit 2 includes a bias voltage superposition module (not shown in Figure 3), a compensation circuit 21 and a driving circuit 22. The bias voltage superposition module is configured to superimpose a first bias voltage Voffset on the voltage Vcs of the sampling resistor Rcs to obtain a first sampling signal Vcs+Voffset, superimpose the first bias voltage Voffset on the current reference signal Vref to obtain a first reference signal Voffset+Vref, and superimpose the first bias voltage Voffset on the first reference current signal -Vref to obtain a second reference signal Voffset-Vref. The compensation circuit 21 is configured to generate a compensation signal Vcomp based on an error signal between the first sampling signal Vcs+Voffset and the first reference signal Voffset+Vref in a case that the voltage Vcs of the sampling resistor Rcs is greater than zero; and generate a compensation signal Vcomp based on an error signal between the first sampling signal Vcs+Voffset and the second reference signal Voffset-Vref in a case that the voltage Vcs of the sampling resistor Rcs is less than zero. The driving circuit 22 is configured to generate control signals G1 and G2 based on the compensation signal Vcomp to control the operation state of the switching circuit 1.

Specifically, the compensation circuit 21 includes a first error amplifier Gm1 and a second error amplifier Gm2. The first error amplifier Gm1 receives the first sampling signal Vcs+Voffset via an inverting input terminal of the first error amplifier Gm1, receives the first reference signal Voffset+Vref via a non-inverting input terminal of the first error amplifier Gm1, and outputs the compensation signal Vcomp via an output terminal of the first error amplifier Gm1 in a case that the voltage Vcs of the sampling resistor Rcs is greater than zero. The second error amplifier Gm2 receives the second reference signal Voffset-Vref via an inverting input terminal of the second error amplifier Gm2, receives the first sampling signal Vcs+Voffset via a non-inverting input terminal of the second error amplifier Gm2, and outputs the compensation signal Vcomp via an output terminal of the second error amplifier Gm2 in a case that the voltage Vcs of the sampling resistor Rcs is less than zero.

Further, the compensation circuit 21 includes a first switch CMP1, a first switch S1 and a second switch S2. The first switch S1 is coupled between the first error amplifier Gm1 and the driving circuit 22. The second switch S2 is coupled between the second error amplifier Gm2 and the driving circuit 22. The first comparator CMP1 receives the voltage Vcs of the sampling resistor Rcs via a non-inverting input terminal of the first comparator CMP1, and an inverting input terminal of the first comparator CMP1 is coupled to the ground potential (having a voltage equal to zero). In response to an output signal of the first comparator CMP1, the first switch S1 and the second switch S2 are controlled to be turned on or turned off. In a case that the voltage Vcs of the sampling resistor Rcs is greater than zero, the first comparator CMP1 outputs a high level, the first switch S1 is turned on, and the second switch S2 is turned off. In a case that the voltage Vcs of the sampling resistor Rcs is less than zero, the first comparator CMP1 outputs a low level, the first switch S1 is turned off, and the second switch S2 is turned on.

In the embodiment, the first error amplifier Gm1 and the second error amplifier Gm2 are both transconductance amplifiers. The compensation circuit 21 further includes a compensation capacitor Cmp. One terminal of the compensation capacitor is grounded and the other terminal of the compensation capacitor is coupled to an input terminal of the driving circuit 22, which is not limited in the present disclosure. For example, in another embodiment, in a case, one of the first error amplifier Gm1 and the second error amplifier Gm2 is an operational amplifier and the other one of the first error amplifier Gm1 and the second error amplifier Gm2is a transconductance amplifier; in another case, the first error amplifier Gm1 and the second error amplifier Gm2 are both operational amplifiers (in this case, the compensation capacitor Cmp is unnecessary).

Further, the driving circuit 22 generates control signals G1 and G2 based on the compensation signal Vcomp and a ramp signal Vsaw. Figure 4 shows a waveform diagram of a driving circuit according to the present disclosure. In Figure 4, Vcomp represents the compensation signal, Vsaw represents the ramp signal, and G1 and G2 represent the control signals. As shown in Figure 4, at a time instant 11, the ramp signal Vsaw starts to rise, G1 is switched to a high level, and G2 remains at a low level. At a time instant t2, the ramp signal Vsaw rises to be equal to the compensation signal Vcomp, G1 is switched to a low level, and G2 remains at the low level. After a reading time period $\Delta t$ (that is, a dead time period), that is, at a time instant t3, the ramp signal Vsaw starts to rise, G1 remains at a low level, and G2 is switched to a high level. In such a cycle, duty cycles of the control signals G1 and G2 are always 50%, so that the power converter has a constant duty cycle. Therefore, the output current Io of the power converter is adjusted by controlling the operation frequency of the power converter. It should be noted that Figure 4 only shows one operation waveform of the driving circuit 22 according to the present disclosure, which is not limited in the present disclosure. For example, in another embodiment, control signals G1 and G2 may be generated based on a triangular wave signal and the compensation signal Vcomp.

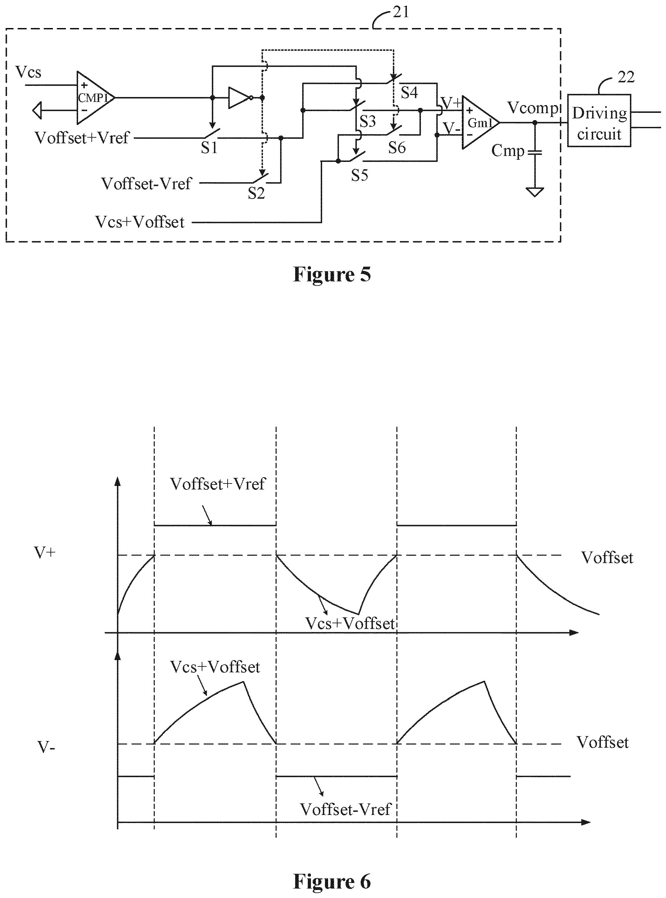

Figure 5 is a schematic circuit diagram of a control circuit according to a second embodiment of the present disclosure. Compared with the control circuit according to the first embodiment shown in Figure 3, in the control circuit according to the second embodiment shown in Figure 5, the compensation circuit 21 only includes one error amplifier, that is, a first error amplifier Gm1. In a case that the voltage Vcs of the sampling resistor Rcs is greater than zero, the first error amplifier Gm1 receives the first sampling signal Vcs+Voffset via an inverting input terminal V- of the first error amplifier Gm1 and receives the first reference signal Voffset+Vref via a non-inverting input terminal V+ of the first error amplifier Gm1. In a case that the voltage Vcs of the sampling resistor Rcs is less than zero, the first error amplifier Gm1 receives the second reference signal Voffset-Vref via an inverting input terminal V- of the first error amplifier Gm1 and receives the first sampling signal Vcs+Voffset via a non-inverting input terminal V+ of the first error amplifier Gm1. The first error amplifier Gm1 outputs the compensation signal Vcomp via an output terminal of the first error amplifier Gm1. Figure 6 shows waveforms of input signals at the non-inverting input terminal V+ and the inverting input terminal V- of the first error amplifier Gm1.

Further, the compensation circuit 21 includes a first comparator CMP1, a first switch S1 to a sixth switch S6. The first switch S1 and the third switch S3 are connected in series between a terminal for receiving the first reference signal Voffset+Vref and the non-inverting input terminal V+. The second switch S2 is coupled between a common terminal of the first switch S1 and the third switch S3 and a terminal for receiving the second reference signal Voffset-Vref. The fourth switch S4 is coupled between the common terminal of the first switch S1 and the third switch S3 and the inverting input terminal V-. The fifth switch S5 is coupled between a terminal for receiving the first sampling signal Vcs+Voffset and the inverting input terminal V-. The sixth switch S6 is coupled between the terminal for receiving the first sampling signal Vcs+Voffset and the non-inverting input terminal V+. The first comparator CMP1 receives the voltage Vcs of the sampling resistor Rcs via a non-inverting input terminal V+ of the first comparator CMP 1, and an inverting input terminal V- of the first comparator CMP1 is coupled to the ground potential (having a voltage equal to zero). Based on an output signal of the first comparator CMP1, the first switch S1 to the sixth switch S6 are controlled to be turned on or turned off. In a case that the voltage Vcs of the sampling resistor Rcs is greater than zero, an output signal of the first comparator CMP1 is at a high level, the first switch S1, the third switch S3 and the fifth switch S5 are turned on, and the second switch S2, the fourth switch S4 and the sixth switch S6 are turned off. In a case that the voltage Vcs of the sampling resistor Rcs is less than zero, an output signal of the first comparator CMP1 is at a low level, the first switch S1, the third switch S3 and the fifth switch S5 are turned off, and the second switch S2, the fourth switch S4 and the sixth switch S6 are turned on.

In the embodiment, other components of the control circuit are the same as the components of the control circuit according to the first embodiment shown in Figure 3, which are not repeated herein.

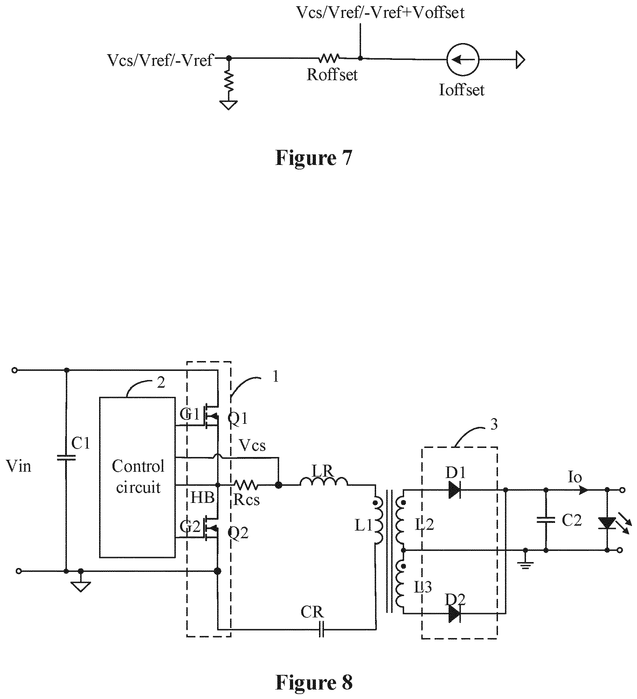

The bias voltage superposition module in the control circuit respectively according to the first embodiment and the second embodiment of the present disclosure includes a bias voltage superposition circuit. Figure 7 is a schematic circuit diagram of a bias voltage superposition circuit according to the present disclosure. As shown in Figure 7, the bias voltage superposition circuit includes a bias voltage generation module and a first resistor R1. The bias voltage generation module includes a bias current source Ioffset and a bias resistor Roffset. A current generated by the bias current source Ioffset flows through the bias resistor Roffset to generate the first bias voltage Voffset across the bias resistor Roffset. One terminal of the first resistor R1 is grounded, and the other terminal of the first resistor R1 is coupled to a first terminal of the bias resistor Roffset. The voltage Vcs of the sampling resistor Rcs, the current reference signal Vref or the first reference current signal -Vref is received via a common terminal of the first resistor R1 and the bias resistor Roffset, to generate the first sampling signal Vcs+Voffset, the first reference signal Voffset+Vref or the second reference signal Voffset-Vref at a second terminal of the bias resistor Roffset. The current generated by the bias current source Ioffset flows from the second terminal of the bias resistor Roffset to the first terminal of the bias resistor Roffset.

In some embodiments, the bias voltage superposition module includes three bias voltage generation circuits for respectively generating the first sampling signal Vcs+Voffset, the first reference signal Voffset+Vref and the second reference signal Voffset-Vref. In other embodiments, the bias voltage superposition module further includes a voltage follower. The voltage follower is configured to replicate the voltage across the bias resistor Roffset, so that it is only required one bias voltage generation module to generate the first sampling signal Vcs+Voffset, the first reference signal Voffset+Vref and the second reference signal Voffset-Vref. Specifically, the first sampling signal Vcs+Voffset is generated based on the voltage Vcs of the sampling resistor Rcs received via the common terminal of the first resistor R1 and the bias resistor Roffset, the first reference signal Voffset+Vref is generated by superimposing a voltage of the voltage follower and the current reference signal Vref, and the second reference signal Voffset-Vref is generated by superimposing the voltage of the voltage follower and the first reference current signal -Vref.

It should be noted that only the embodiments of the bias voltage superposition module according to the present disclosure are described herein. The bias voltage superposition module is not limited in the present disclosure, and any circuits that may perform the above functions fall within the protection scope of the present disclosure.

Figure 8 is a schematic circuit diagram of a power converter according to a second embodiment of the present disclosure. Compared with the power converter according to the first embodiment shown in Figure 1, in the power converter according to the second embodiment shown in Figure 8, a first terminal of the sampling resistor Rcs is coupled to the common terminal HB of the first power switch Q1 and the second power switch Q2, a second terminal of the sampling resistor Rcs is coupled to a terminal of the resonant module, and another terminal of the resonant module is coupled to the ground potential. The remaining parts of power converter are the same as the power converter according to the first embodiment, which are not repeated herein.

In a case that the common terminal HB of the first power switch Q1 serves as a ground terminal (which is a floating ground terminal) of the control circuit, the voltage Vcs of the sampling resistor Rcs may be obtained by only detecting a voltage at the second terminal of the sampling resistor Rcs. Therefore, according to the embodiment shown in Figure 8, it is convenient to sample the voltage Vcs of the sampling resistor Rcs.

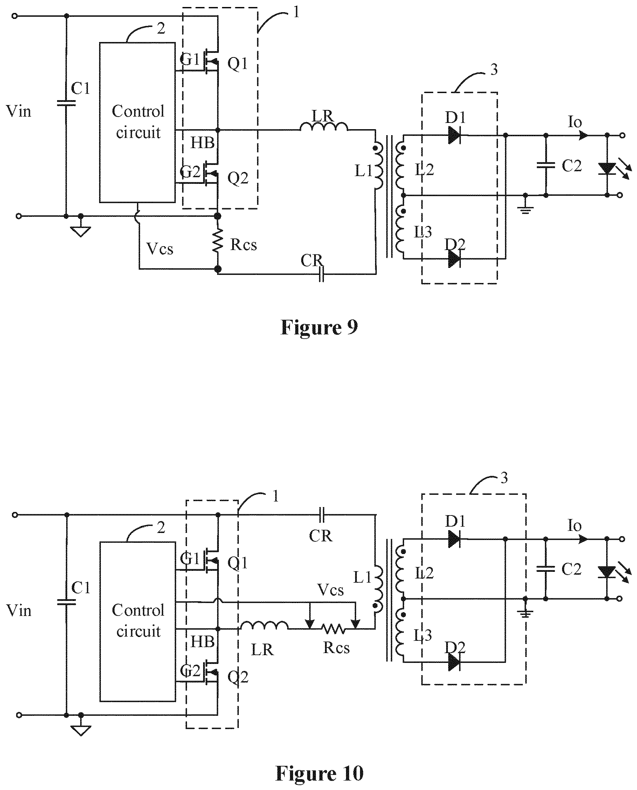

Figure 9 is a schematic circuit diagram of a power converter according to a third embodiment of the present disclosure. Compared with the power converter according to the first embodiment shown in Figure 1, in the power converter according to the third embodiment shown in Figure 9, a terminal of the resonant module is coupled to the common terminal HB of the first power switch Q1 and the second power switch Q2, another terminal of the resonant module is coupled to a first terminal of the sampling resistor Rcs, and a second terminal of the sampling resistor Rcs is grounded. The remaining parts of power converter are the same as the power converter according to the first embodiment, which are not repeated herein.

In a case that the ground potential terminal serves as a ground terminal of the control circuit, the voltage Vcs of the sampling resistor Rcs may be obtained by only detecting a voltage at the first terminal of the sampling resistor Rcs. Therefore, according to the embodiment shown in Figure 9, it is convenient to sample the voltage Vcs of the sampling resistor Rcs.

Figure 10 is a schematic circuit diagram of a power converter according to a fourth embodiment of the present disclosure. Compared with the power converter according to the first embodiment shown in Figure 1, in the power converter according to the fourth embodiment shown in Figure 10, the resonant inductor LR, the sampling resistor Rcs, the primary winding L1 and the resonant capacitor CR are connected in series between the common terminal HB of the first power switch Q1 and the second switch Q2 and a high potential terminal of an input terminal of the power converter. The remaining parts of power converter are the same as the power converter according to the first embodiment, which are not repeated herein.

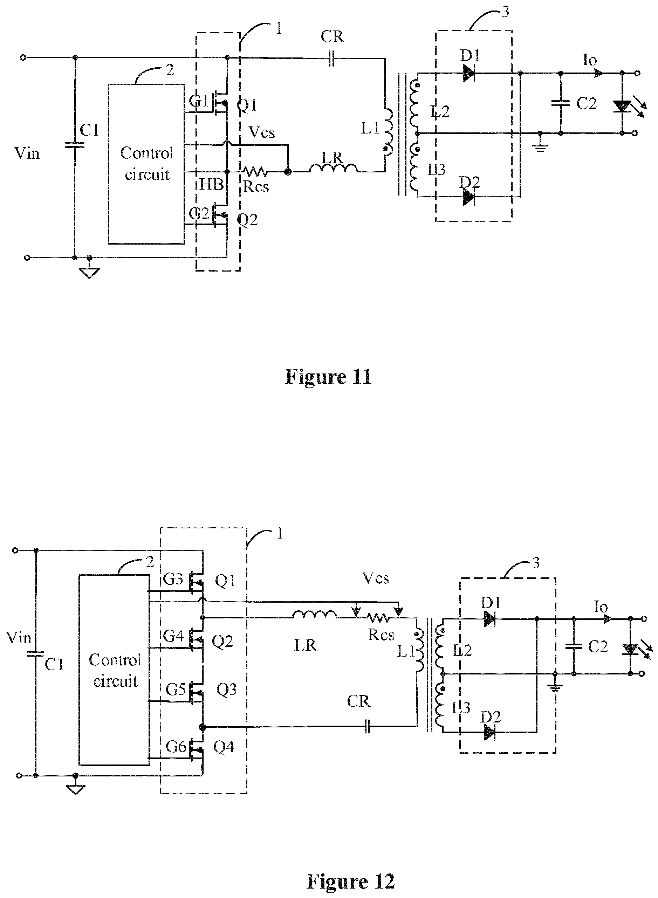

Figure 11 is a schematic circuit diagram of a power converter according to a fifth embodiment of the present disclosure. Compared with the power converter according to the fourth embodiment shown in Figure 10, in the power converter according to the fifth embodiment shown in Figure 11, the first terminal of the sampling resistor Rcs is coupled to the common terminal HB of the first power switch Q1 and the second switch Q2, the second terminal of the sampling resistor Rcs is coupled to a terminal of the resonant module, and another terminal of the resonant module is coupled to the high potential terminal of the input terminal of the power converter. The remaining parts of power converter are the same as the power converter according to the fourth embodiment, which are not repeated herein.

In a case that the common terminal HB of the first power switch Q1 serves as a ground terminal (which is a floating ground terminal) of the control circuit, the voltage Vcs of the sampling resistor Rcs may be obtained by only detecting a voltage at the second terminal of the sampling resistor Rcs. Therefore, according to the embodiment shown in Figure 11, it is convenient to sample the voltage Vcs of the sampling resistor Rcs.

In addition to the structure according to the first embodiment, the switching circuit 1 according to the present disclosure may have other structures, which are not limited in the present disclosure. For example, Figure 12 is a schematic circuit diagram of a power converter according to a sixth embodiment of the present disclosure. Compared with the power converter according to the first embodiment shown in Figure 1, in the power converter according to the sixth embodiment shown in Figure 12, the power converter is implemented by a three-level LLC circuit, and the switching circuit 1 includes a first power switch Q1, a second power switch Q2, a third power switch Q3 and a fourth power switch Q4. The first power switch Q1, the second power switch Q2, the third power switch Q3 and the fourth power switch Q4 are connected in series between a high potential terminal of an input terminal of the power converter and a ground potential terminal. A series structure, formed by the resonant module and the sampling resistor, is coupled between a common terminal of the first power switch Q1 and the second power switch Q2 and a common terminal of the third switch Q3 and the fourth switch Q4. The first power switch Q1, the second power switch Q2, the third power switch Q3 and the fourth power switch Q4 are respectively controlled based on control signals G3 to G6 to be turned on or turned off. The remaining parts of power converter are the same as the power converter according to the first embodiment, which are not repeated herein.

The switching state of the first power switch Q1 is same as the switching state of the fourth power switch Q4, and the switching states of the second power switch Q2 and the third power switch Q3 are complementary to the switching states of the first power switch Q1 and the fourth power switch Q4. Therefore, based on the control circuit shown in Figure 3 or 5, the control circuit 2 in the embodiment further includes a logic circuit. The logic circuit generates control signals G3 to G6 based on the control signals G1 and G2 to control the operation state of the switching circuit 1.

Although the above embodiments are described and explained separately, there are some common technologies between the embodiments. Those skilled in the art may replace and integrate these embodiments. For details not clearly described in an embodiment, one may refer to another embodiment in which these details are described. Variations and modifications are possible within the scope of the appended claims.

## Claims

1.   A control circuit, applied to a power converter, wherein the power converter comprises:

a switching circuit (1) comprising at least one half-bridge, a transformer comprising a primary winding (L1) and a secondary winding (L2), a resonant inductor (LR) and a resonant capacitor (CR) which are connected in series with the primary winding (L1) to form a resonant module, and a sampling resistor (Rcs) connected in series with the resonant module or connected in series in the resonant module, wherein
in a case that the switching circuit (1) operates at a frequency greater than a first reference frequency (f1), the control circuit (2) is configured to generate a control signal (G1, G2) based on an absolute value of a voltage of the sampling resistor (Rcs) and a current reference signal (Vref) to control an operation state of the switching circuit (1) to adjust an output current of the power converter, wherein the current reference signal (Vref) represents an expected value of the output current of the power converter; and
the control circuit (2) is **characterized in that**: the control circuit (2) comprises:

a bias voltage superposition module, configured to superimpose a first bias voltage (Voffset) on the voltage (Vcs) of the sampling resistor (Rcs) to obtain a first sampling signal (Vcs+Voffset), superimpose the first bias voltage on the current reference signal (Vref) to obtain a first reference signal (Voffset+Vref), and superimpose the first bias voltage on a first reference current signal (-Vref) to obtain a second reference signal (Voffset-Vref), wherein the first reference current signal (-Vref) is an inversion signal of the current reference signal (Vref);
a compensation circuit (21), configured to:

generate a compensation signal based on an error signal between the first sampling signal (Vcs+Voffset), and the first reference signal (Voffset+Vref) in a case that the voltage of the sampling resistor (Rcs) is greater than zero; and generate a compensation signal (Vcomp) based on an error signal between the first sampling signal (Vcs+Voffset), and the second reference signal (Voffset-Vref) in a case that the voltage of the sampling resistor (Rcs) is less than zero; and
a driving circuit (22), configured to generate the control signal (G1, G2) based on a comparison result of the compensation signal (Vcomp) and a ramp signal (Vsaw) to control the operation state of the switching circuit (1).

2. The control circuit according to claim 1, wherein in the case that the switching circuit (1) operates at a frequency greater than a first reference frequency, the voltage of the sampling resistor (Rcs) represents the output current of the power converter, wherein the first reference frequency is configured to be equal to a reciprocal of a square root of a product of an inductance of the resonant inductor (LR) and a capacity of the resonant capacitor (CR).

3. The control circuit according to claim 1, wherein the compensation circuit (21) comprises:

   a first error amplifier (Gm1), configured to receive the first sampling signal via an inverting input terminal of the first error amplifier (Gm1), receive the first reference signal via a non-inverting input terminal of the first error amplifier (Gm1), and output the compensation signal via an output terminal of the first error amplifier (Gm1) in a case that the voltage of the sampling resistor is greater than zero; and
   a second error amplifier (Gm2), configured to receive the second reference signal via an inverting input terminal of the second error amplifier (Gm2), receive the first sampling signal via a non-inverting input terminal of the second error amplifier (Gm2), and output the compensation signal via an output terminal of the second error amplifier (Gm2) in a case that the voltage of the sampling resistor is less than zero.

4. The control circuit according to claim 1, wherein the compensation circuit (21) comprises:
   a first error amplifier (Gm1), configured to:

   in a case that the voltage of the sampling resistor (Rcs) is greater than zero, receive the first sampling signal via an inverting input terminal of the first error amplifier (Gm1) and receive the first reference signal via a non-inverting input terminal of the first error amplifier (Gm 1);
   in a case that the voltage of the sampling resistor (Rcs) is less than zero, receive the second reference signal via an inverting input terminal of the first error amplifier (Gm1) and receive the first sampling signal via a non-inverting input terminal of the first error amplifier (Gm1); and
   output the compensation signal via an output terminal of the first error amplifier (Gm1).

5. The control circuit according to claim 1, further comprising a bias voltage generation module, wherein the bias voltage generation module comprises a bias current source (Ioffset) and a bias resistor (Roffset), and a current generated by the bias current source (Ioffset) flows through the bias resistor (Roffset) to generate the first bias voltage across the bias resistor (Roffset).

6. A power converter, comprising:

   a switching circuit (1), comprising at least one half-bridge;
   a transformer, comprising a primary winding (L1) and a secondary winding (L2);
   a resonant inductor (LR) and a resonant capacitor (CR), connected in series with the primary winding (L1) to form a resonant module;
   a sampling resistor (Res), connected in series with the resonant module or connected in series in the resonant module; and
   the control circuit (2) according to any one of claims 1 to 5.

7. The power converter according to claim 6, wherein the primary winding (L1) is configured to have an inductance greater than at least twice an inductance of the resonant inductor (LR) to control the switching circuit (1) to operate at a frequency greater than a first reference frequency, wherein a voltage of the sampling resistor (Rcs) represents an output current of the power converter.

8. The power converter according to claim 6, wherein in a case that a ratio of the number of turns of the primary winding (L1) and the number of turns of the secondary winding (L2) is equal to N:1, an absolute value of the voltage of the sampling resistor (Rcs) is proportional to 1/N of the output current of the power converter.

9. A control method, applied to a power converter, wherein

   the power converter comprises a switching circuit (1);
   the switching circuit (1) comprises at least one half-bridge, a transformer comprising a primary winding (L1) and a secondary winding (L2), a resonant inductor (LR) and a resonant capacitor (CR) which are connected in series with the primary winding (L1) to form a resonant module, a sampling resistor (Rcs) connected in series with the resonant module or connected in series in the resonant module;
   the control method comprises:
   in a case that the switching circuit (1) operates at a frequency greater than a first reference frequency (f1), generating a control signal (G1, G2) based on an absolute value of a voltage of the sampling resistor (Rcs) and a current reference signal (Vref) to control an operation state of the switching circuit (1) to adjust an output current of the power converter, wherein the current reference signal (Vref) represents an expected value of the output current of the power converter; and

the control method is **characterized in**:

superimposing a first bias voltage (Voffset) on the voltage (Vcs) of the sampling resistor (Rcs) to obtain a first sampling signal (Vcs+Voffset), superimposing the first bias voltage (Voffset) on the current reference signal (Vref) to obtain a first reference signal (Voffset+Vref), and superimposing the first bias voltage (Voffset) on a first reference current signal (-Vref) to obtain a second reference signal (Voffset-Vref), wherein the first reference current signal (-Vref) is an inversion signal of the current reference signal (Vref);

generating a compensation signal (Vcomp) based on an error signal between the first sampling signal (Vcs+Voffset) and the first reference signal (Voffset+Vref) in a case that the voltage of the sampling resistor (Rcs) is greater than zero;

generating a compensation signal (Vcomp) based on an error signal between the first sampling signal (Vcs+Voffset) and the second reference signal (Voffset-Vref) in a case that the voltage of the sampling resistor (Rcs) is less than zero; and

generating the control signal based on a comparison result of the compensation signal (Vcomp) and a ramp signal (Vsaw) to control the operation state of the switching circuit (1).

**Patentansprüche**

1. Steuerschaltung, angewendet auf einen Leistungswandler, wobei der Leistungswandler umfasst:

eine Schaltschaltung (1), umfassend mindestens eine Halbbrücke, einen Transformator mit einer Primärwicklung (L1) und einer Sekundärwicklung (L2), eine Resonanzinduktivität (LR) und einen Resonanzkondensator (CR), die in Reihe mit der Primärwicklung (L1) zur Bildung eines Resonanzmoduls geschaltet sind, sowie einen Abtastwiderstand (Res), der mit dem Resonanzmodul in Reihe geschaltet oder in dem Resonanzmodul in Reihe geschaltet ist, wobei in einem Fall, in dem die Schaltschaltung (1) mit einer Frequenz arbeitet, die größer als eine erste Referenzfrequenz (f1) ist, die Steuerschaltung (2) ausgebildet ist, ein Steuersignal (G1, G2) basierend auf einem Absolutwert einer Spannung des Abtastwiderstands (Rcs) und eines Stromreferenzsignals (Vref) zum Steuern eines Betriebszustands der Schaltschaltung (1) zu erzeugen, um einen Ausgangsstroms des Leistungswandlers einzustellen, wobei das Stromreferenzsignal (Vref) einen Erwartungswert des Ausgangsstroms des Leistungswandlers darstellt; und

wobei die Steuerschaltung (2) **dadurch gekennzeichnet ist, dass**:
die Steuerschaltung (2) umfasst:

ein Vorspannungsüberlagerungsmodul, das ausgebildet ist, eine erste Vorspannung (Voffset) auf die Spannung (Vcs) des Abtastwiderstands (Rcs) zu überlagern, um ein erstes Abtastsignal (Vcs+Voffset) zu erhalten, die erste Vorspannung auf das Stromreferenzsignal (Vref) zu überlagern, um ein erstes Referenzsignal (Voffset+Vref) zu erhalten, und die erste Vorspannung auf ein erstes Referenzstromsignal (-Vref) zu überlagern, um ein zweites Referenzsignal (Voffset-Vref) zu erhalten, wobei das erste Referenzstromsignal (-Vref) ein Umkehrsignal des Stromreferenzsignals (Vref) ist;

eine Kompensationsschaltung (21), die ausgebildet ist:

ein Kompensationssignal basierend auf einem Fehlersignal zwischen dem ersten Abtastsignal (Vcs+Voffset) und dem ersten Referenzsignal (Voffset+Vref) zu erzeugen, in einem Fall, indem die Spannung des Abtastwiderstands (Rcs) größer als Null ist; und

ein Kompensationssignal (Vcomp) basierend auf einem Fehlersignal zwischen dem ersten Abtastsignal (Vcs+Voffset) und dem zweiten Referenzsignal (Voffset-Vref) zu erzeugen, in einem Fall, indem die Spannung des Abtastwiderstands (Rcs) kleiner als Null ist; und

eine Treiberschaltung (22), die ausgebildet ist, das Steuersignal (G1, G2) basierend auf einem Vergleichsergebnis des Kompensationssignals (Vcomp) und eines Rampensignals (Vsaw) zu erzeugen, um den Betriebszustand der Schaltschaltung (1) zu steuern.

2. Steuerschaltung nach Anspruch 1, wobei in dem Fall, in dem die Schaltschaltung (1) mit einer Frequenz arbeitet, die größer als eine erste Referenzfrequenz ist, die Spannung des Abtastwiderstands (Rcs) den Ausgangsstrom des Leistungswandlers darstellt, wobei die erste Referenzfrequenz ausgebildet ist, gleich einem Kehrwert einer Quadratwurzel eines Produkts aus einer Induktivität der Resonanzinduktivität (LR) und einer Kapazität des Resonanzkondensators (CR) zu sein.

3. Steuerschaltung nach Anspruch 1, wobei die Kompensationsschaltung (21) umfasst:

einen ersten Fehlerverstärker (Gm1), der ausgebildet ist, das erste Abtastsignal über einen invertierenden Eingangsanschluss des ersten Fehlerverstärkers (Gm1) zu empfangen, das erste Referenzsignal über einen nicht invertierenden Eingangsanschluss des ersten Fehlerverstärkers (Gm1) zu empfangen, und das Kompensationssignal über einen Ausgangsanschluss des ersten Fehlerverstärkers (Gm1) auszugeben, in einem Fall, indem die Spannung des Abtastwiderstands größer als Null ist; und einen zweiten Fehlerverstärker (Gm2), der ausgebildet ist, das zweite Referenzsignal über einen invertierenden Eingangsanschluss des zweiten Fehlerverstärkers (Gm2) zu empfangen, das erste Abtastsignal über einen nicht invertierenden Eingangsanschluss des zweiten Fehlerverstärkers (Gm2) zu empfangen, und das Kompensationssignal über einen Ausgangsanschluss des zweiten Fehlerverstärkers (Gm2) auszugeben, in einem Fall, indem die Spannung des Abtastwiderstands kleiner als Null ist.

4. Steuerschaltung nach Anspruch 1, wobei die Kompensationsschaltung (21) umfasst:
einen ersten Fehlerverstärker (Gm1), der ausgebildet ist:

in einem Fall, indem die Spannung des Abtastwiderstands (Rcs) größer als Null ist, das erste Abtastsignal über einen invertierenden Eingangsanschluss des ersten Fehlerverstärkers (Gm1) zu empfangen und das erste Referenzsignal über einen nicht invertierenden Eingangsanschluss des ersten Fehlerverstärkers (Gm1) zu empfangen; in einem Fall, indem die Spannung des Abtastwiderstands (Rcs) kleiner als Null ist, das zweite Referenzsignal über einen invertierenden Eingangsanschluss des ersten Fehlerverstärkers (Gm1) zu empfangen und das erste Abtastsignal über einen nichtinvertierenden Eingangsanschluss des ersten Fehlerverstärker (Gm1) zu empfangen; und das Kompensationssignal über einen Ausgangsanschluss des ersten Fehlerverstärkers (Gm1) auszugeben.

5. Steuerschaltung nach Anspruch 1, ferner umfassend ein Vorspannungserzeugungsmodul, wobei das Vorspannungserzeugungsmodul eine Vorspannungsstromquelle (Ioffset) und einen Vorspannungswiderstand (Roffset) umfasst, und wobei ein von der Vorspannungsstromquelle erzeugter Strom (Ioffset) durch den Vorspannungswiderstand (Roffset) fließt, um die erste Vorspannung an dem Vorspannungswiderstand (Roffset) zu erzeugen.

6. Leistungswandler, umfassend:

eine Schaltschaltung (1), umfassend mindestens eine Halbbrücke; einen Transformator, umfassend eine Primärwicklung (L1) und eine Sekundärwicklung (L2); eine Resonanzinduktivität (LR) und einen Resonanzkondensator (CR), die in Reihe mit der Primärwicklung (L1) geschaltet sind, um ein Resonanzmodul zu bilden; einen Abtastwiderstand (Res), der mit dem Resonanzmodul in Reihe geschaltet oder in dem Resonanzmodul in Reihe geschaltet ist; und die Steuerschaltung (2) nach einem der Ansprüche 1 bis 5.

7. Leistungswandler nach Anspruch 6, wobei die Primärwicklung (L1) ausgebildet ist, eine Induktivität aufzuweisen, die größer als mindestens das Doppelte einer Induktivität der Resonanzinduktivität (LR) ist, um die Schaltschaltung (1) zu steuern, bei einer Frequenz zu arbeiten, die größer als eine erste Referenzfrequenz ist, wobei eine Spannung des Abtastwiderstands (Rcs) einen Ausgangsstrom des Leistungswandlers darstellt.

8. Leistungswandler nach Anspruch 6, wobei in einem Fall, in dem ein Verhältnis der Anzahl der Windungen der Primärwicklung (L1) und der Anzahl der Windungen der Sekundärwicklung (L2) gleich N:1 ist, ein Absolutwert der Spannung des Abtastwiderstands (Rcs) proportional zu 1/N des Ausgangsstroms des Leistungswandlers ist.

9. Steuerverfahren, angewendet auf einen Leistungswandler, wobei

der Leistungswandler eine Schaltschaltung (1) umfasst; wobei die Schaltschaltung (1) mindestens eine Halbbrücke, einen Transformator mit einer Primärwicklung (L1) und einer Sekundärwicklung (L2), eine Resonanzinduktivität (LR) und einen Resonanzkondensator (CR) umfasst, die in Reihe mit der Primärwicklung (L1) zur Bildung eines Resonanzmoduls geschaltet sind, sowie einen Abtastwiderstand (Res), der mit dem Resonanzmodul in Reihe geschaltet oder in dem Resonanzmodul in Reihe geschaltet ist; wobei das Steuerverfahren umfasst:

in einem Fall, in dem die Schaltschaltung (1) mit einer Frequenz arbeitet, die größer als eine erste Referenzfrequenz (f1) ist, Generieren eines Steuersignals (G1, G2) basierend auf einem Absolutwert einer Spannung des Abtastwiderstands (Rcs) und einem Stromreferenzsignal (Vref) zum Steuern eines Betriebszustands der Schaltschaltung (1), um einen Ausgangsstroms des Leistungswandlers einzustellen, wobei das Stromreferenzsignal (Vref) einen Erwartungswert des Ausgangsstroms des Leistungswandlers darstellt;
und
wobei das Steuerverfahren **gekennzeichnet ist durch**:

Überlagern einer ersten Vorspannung (Voffset) auf die Spannung (Vcs) des Abtastwiderstands (Res), um ein erstes Abtastsignal (Vcs+Voffset) zu erhalten, Überlagern der ersten Vorspannung (Voffset) auf das Stromreferenzsignal (Vref), um ein erstes Referenzsignal (Voffset+Vref) zu erhalten, und Überlagern der ersten Vorspannung (Voffset) auf ein erstes Referenzstromsignal (-Vref), um ein zweites Referenzsignal (Voffset-Vref) zu erhalten, wobei das erste Referenzstromsignal (-Vref) ein Umkehrsignal des Stromreferenzsignals (Vref) ist;
Erzeugen eines Kompensationssignals (Vcomp) basierend auf einem Fehlersignal zwischen dem ersten Abtastsignal (Vcs+Voffset) und dem ersten Referenzsignal (Voffset+Vref) in einem Fall, indem die Spannung des Abtastwiderstands (Rcs) größer als Null ist;
Erzeugen eines Kompensationssignals (Vcomp) basierend auf einem Fehlersignal zwischen dem ersten Abtastsignal (Vcs+Voffset) und dem zweiten Referenzsignal (Voffset-Vref) in einem Fall, indem die Spannung des Abtastwiderstands (Rcs) kleiner als Null ist; und
Erzeugen des Steuersignals basierend auf einem Vergleichsergebnis des Kompensationssignals (Vcomp) und eines Rampensignals (Vsaw), um den Betriebszustand der Schaltschaltung (1) zu steuern.

## Revendications

**1.** Circuit de commande, appliqué à un convertisseur de puissance, dans lequel le convertisseur de puissance comprend : un circuit de commutation (1) comprenant au moins un demi-pont, un transformateur comprenant un enroulement primaire (L1) et un enroulement secondaire (L2), un inducteur de résonance (LR) et un condensateur de résonance (CR) qui sont reliés en série avec l'enroulement primaire (L1) pour former un module de résonance, et une résistance d'échantillonnage (Rcs) reliée en série avec le module de résonance ou reliée en série dans le module de résonance, dans lequel

dans un cas où le circuit de commutation (1) fonctionne à une fréquence supérieure à une première fréquence de référence (f1), le circuit de commande (2) est configuré pour générer un signal de commande (G1, G2) sur la base d'une valeur absolue d'une tension de la résistance d'échantillonnage (Rcs) et d'un signal de référence de courant (Vref) pour commander un état de fonctionnement du circuit de commutation (1) pour ajuster un courant de sortie du convertisseur de puissance, dans lequel le signal de référence de courant (Vref) représente une valeur attendue du courant de sortie du convertisseur de puissance ; et
le circuit de commande (2) est **caractérisé en ce que** :
le circuit de commande (2) comprend :

un module de superposition de tension de polarisation, configuré pour superposer une première tension de polarisation (Voffset) sur la tension (Vcs) de la résistance d'échantillonnage (Rcs) pour obtenir un premier signal d'échantillonnage (Vcs+Voffset), superposer la première tension de polarisation sur le signal de référence de courant (Vref) pour obtenir un premier signal de référence (Voffset+Vref), et superposer la première tension de polarisation sur un premier signal de courant de référence (-Vref) pour obtenir un second signal de référence (Voffset-Vref), dans lequel le premier signal de courant de référence (-Vref) est un signal d'inversion du signal de référence de courant (Vref) ;
un circuit de compensation (21), configuré pour :

générer un signal de compensation sur la base d'un signal d'erreur entre le premier signal d'échantillonnage (Vcs+Voffset) et le premier signal de référence (Voffset+Vref) dans un cas où la tension de la résistance d'échantillonnage (Rcs) est supérieure à zéro ; et

générer un signal de compensation (Vcomp) sur la base d'un signal d'erreur entre le premier signal d'échantillonnage (Vcs+Voffset) et le second signal de référence (Voffset-Vref) dans un cas où la tension de la résistance d'échantillonnage (Rcs) est inférieure à zéro ; et

un circuit d'attaque (22), configuré pour générer le signal de commande (G1, G2) sur la base d'un résultat de comparaison du signal de compensation (Vcomp) et d'un signal de rampe (Vsaw) pour commander l'état de fonctionnement du circuit de commutation (1).

2. Circuit de commande selon la revendication 1, dans lequel
dans le cas où le circuit de commutation (1) fonctionne à une fréquence supérieure à une première fréquence de référence, la tension de la résistance d'échantillonnage (Rcs) représente le courant de sortie du convertisseur de puissance, dans lequel la première fréquence de référence est configurée pour être égale à une réciproque d'une racine carrée d'un produit d'une inductance de l'inducteur de résonance (LR) et d'une capacité du condensateur de résonance (CR).

3. Circuit de commande selon la revendication 1, dans lequel le circuit de compensation (21) comprend :

un premier amplificateur d'erreur (Gm1), configuré pour recevoir le premier signal d'échantillonnage via une borne d'entrée d'inversion du premier amplificateur d'erreur (Gm1), recevoir le premier signal de référence via une borne d'entrée de non-inversion du premier amplificateur d'erreur (Gm1), et délivrer le signal de compensation via une borne de sortie du premier amplificateur d'erreur (Gm1) dans un cas où la tension de la résistance d'échantillonnage est supérieure à zéro ; et

un second amplificateur d'erreur (Gm2), configuré pour recevoir le second signal de référence via une borne d'entrée d'inversion du second amplificateur d'erreur (Gm2), recevoir le premier signal d'échantillonnage via une borne d'entrée de non-inversion du second amplificateur d'erreur (Gm2), et délivrer le signal de compensation via une borne de sortie du second amplificateur d'erreur (Gm2) dans un cas où la tension de la résistance d'échantillonnage est inférieure à zéro.

4. Circuit de commande selon la revendication 1, dans lequel le circuit de compensation (21) comprend :

un premier amplificateur d'erreur (Gm1), configuré pour :

dans un cas où la tension de la résistance d'échantillonnage (Rcs) est supérieure à zéro, recevoir le premier signal d'échantillonnage via une borne d'entrée d'inversion du premier amplificateur d'erreur (Gm1) et recevoir le premier signal de référence via une borne d'entrée de non-inversion du premier amplificateur d'erreur (Gm1) ;

dans un cas où la tension de la résistance d'échantillonnage (Rcs) est inférieure à zéro, recevoir le second signal de référence via une borne d'entrée d'inversion du premier amplificateur d'erreur (Gm1) et recevoir le premier signal d'échantillonnage via une borne d'entrée de non-inversion du premier amplificateur d'erreur (Gm1) ; et

délivrer le signal de compensation via une borne de sortie du premier amplificateur d'erreur (Gm1).

5. Circuit de commande selon la revendication 1, comprenant en outre un module de génération de tension de polarisation, dans lequel le module de génération de tension de polarisation comprend une source de courant de polarisation (Ioffset) et une résistance de polarisation (Roffset), et un courant généré par la source de courant de polarisation (Ioffset) circule à travers la résistance de polarisation (Roffset) pour générer la première tension de polarisation à travers la résistance de polarisation (Roffset).

6. Convertisseur de puissance, comprenant :

un circuit de commutation (1) comprenant au moins un demi-pont ;

un transformateur comprenant un enroulement primaire (L1) et un enroulement secondaire (L2) ;

un inducteur de résonance (LR) et un condensateur de résonance (CR) qui sont reliés en série avec l'enroulement primaire (L1) pour former un module de résonance ;

une résistance d'échantillonnage (Rcs) reliée en série avec le module de résonance ou reliée en série dans le module de résonance ; et

le circuit de commande (2) selon l'une quelconque des revendications 1 à 5.

7. Convertisseur de puissance selon la revendication 6, dans lequel
l'enroulement primaire (L1) est configuré pour avoir une inductance supérieure à au moins deux fois une inductance de l'inducteur de résonance (LR) pour commander au circuit de commutation (1) de fonctionner à une fréquence supérieure à une première fréquence de référence, dans lequel une tension de la résistance d'échantillonnage (Rcs) représente un courant de sortie du convertisseur de puissance.

8. Convertisseur de puissance selon la revendication 6, dans lequel
dans un cas où un rapport du nombre de tours de l'enroulement primaire (L1) et du nombre de tours de l'enroulement secondaire (L2) est égal à N:1, une valeur absolue de la tension de la résistance d'échantillonnage (Rcs) est proportionnelle à 1/N du courant de sortie du convertisseur de puissance.

9. Procédé de commande, appliqué à un convertisseur de puissance, dans lequel

le convertisseur de puissance comprend un circuit de commutation (1) ;
le circuit de commutation (1) comprend au moins un demi-pont, un transformateur comprenant un enroulement primaire (L1) et un enroulement secondaire (L2), un inducteur de résonance (LR) et un condensateur de résonance (CR) qui sont reliés en série avec l'enroulement primaire (L1) pour former un module de résonance, une résistance d'échantillonnage (Rcs) reliée en série avec le module de résonance ou reliée en série dans le module de résonance,
le procédé de commande comprend :

dans un cas où le circuit de commutation (1) fonctionne à une fréquence supérieure à une première fréquence de référence (f1), la génération d'un signal de commande (G1, G2) sur la base d'une valeur absolue d'une tension de la résistance d'échantillonnage (Rcs) et d'un signal de référence de courant (Vref) pour commander un état de fonctionnement du circuit de commutation (1) pour ajuster un courant de sortie du convertisseur de puissance, dans lequel le signal de référence de courant (Vref) représente une valeur attendue du courant de sortie du convertisseur de puissance ; et
le procédé de commande est **caractérisé par** :

la superposition d'une première tension de polarisation (Voffset) sur la tension (Vcs) de la résistance d'échantillonnage (Rcs) pour obtenir un premier signal d'échantillonnage (Vcs+Voffset), la superposition de la première tension de polarisation (Voffset) sur le signal de référence de courant (Vref) pour obtenir un premier signal de référence (Voffset+Vref), et la superposition de la première tension de polarisation (Voffset) sur un premier signal de courant de référence (-Vref) pour obtenir un second signal de référence (Voffset-Vref), dans lequel le premier signal de courant de référence (-Vref) est un signal d'inversion du signal de référence de courant (Vref) ;
la génération d'un signal de compensation (Vcomp) sur la base d'un signal d'erreur entre le premier signal d'échantillonnage (Vcs+Voffset) et le premier signal de référence (Voffset+Vref) dans un cas où la tension de la résistance d'échantillonnage (Rcs) est supérieure à zéro ;
la génération d'un signal de compensation (Vcomp) sur la base d'un signal d'erreur entre le premier signal d'échantillonnage (Vcs+Voffset) et le second signal de référence (Voffset-Vref) dans un cas où la tension de la résistance d'échantillonnage (Rcs) est inférieure à zéro ; et
la génération du signal de commande sur la base d'un résultat de comparaison du signal de compensation (Vcomp) et d'un signal de rampe (Vsaw) pour commander l'état de fonctionnement du circuit de commutation (1).

**Figure 1**

**Figure 2**

**Figure 3**

**Figure 4**

**Figure 5**

**Figure 6**

Vcs/Vref/-Vref+Voffset

Vcs/Vref/-Vref

Roffset

Ioffset

**Figure 7**

Vin

C1

Control circuit

2

G1 Q1

Vcs

HB Rcs

G2 Q2

1

LR

L1

CR

3

D1

L2

L3

D2

Io

C2

**Figure 8**

**Figure 9**

**Figure 10**

**Figure 11**

**Figure 12**

**EP 4 064 540 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2339736 A1
- CN 209389939 U
- US 20190036456 A1
- US 2021036612 A1
- CN 110277922 A
- EP 2911285 A1
- US 20140268897 A1